# EUROPÄISCHE PATENTSCHRIFT

(11) **EP 1 046 622 B1**
(45) Veröffentlichungstag und Bekanntmachung des Hinweises auf die Patenterteilung: **02.07.2003**
(21) Anmeldenummer: 00108113.2
(22) Anmeldetag: 13.04.2000
(51) Int. Cl.: C04B 38/08

(54) **Verfahren zur Herstellung eines Baukörpers**
A method of producing formed building material
Procédé de fabrication d'éléments de construction

(30) Priorität: 22.04.1999 DE 19918249; 19.07.1999 DE 19933728; 19.07.1999 DE 19933737
(43) Veröffentlichungstag der Anmeldung: 25.10.2000
(73) Patentinhaber: Deutsche Perlite GmbH, 44147 Dortmund (DE)
(72) Erfinder: Koslowski, Thomas, Dr.-Ing., 52072 Aachen (DE)
(74) Vertreter: Becker, Thomas, Dr., Dipl.-Ing.

(56) Entgegenhaltungen:
- EP-A- 0 856 496
- DE-A- 2 805 153
- DE-A- 3 808 160

## Beschreibung

Die Erfindung betrifft ein Verfahren zur Herstellung eines Baukörpers. Unter den Begriff "Baukörper" werden alle Arten von Formteilen subsumiert, die im Bauwesen Anwendung finden, beispielsweise Vollsteine, Lochsteine, Hohlblocksteine, Verblender, Platten, Säulen etc.

Diese Baukörper sollen verschiedene Aufgaben erfüllen. Gefordert werden vor allem eine gute Wärmedämmung, anwendungsspezifische Festigkeitswerte sowie eine einfache Herstellung.

Kalksandsteine erfüllen die Kriterien einer leichten Herstellung und guten Druckfestigkeit, weisen jedoch aufgrund Ihrer hohen Dichte (Rohdichte nach DIN 106: 600 bis 2.200 kg/m³) eine schlechte Wärmedämmung auf.

Gasbetonsteine sind in Rohdichteklassen zwischen 400 und 800 kg/m³ eingeteilt. Gasbetonsteine mit geringer Rohdichte weisen zwar günstigere Wärmedämmeigenschaften als Kalksandsteine auf, ihre Druckfestigkeit ist jedoch deutlich schlechter als die von Kalksandsteinen. Darüber hinaus ist das Herstellungsverfahren sehr viel aufwendiger als bei Kalksandsteinen.

Bei Kalksandsteinen wird Branntkalk (CaO) im Mischungsverhältnis von etwa 1:12 mit kieselsäurehaltigem Sand unter geringem Wasserzusatz gemischt. Bei einer Zwischenlagerung löscht der Branntkalk zu Kalkhydraten ab. Die Mischung wird anschließend mit Drücken bis etwa 25 N/mm² zu Steinen geformt. Die Steine werden danach in einem Autoklaven gehärtet, wobei es durch die Bildung von Calziumhydrosilikaten an den Kornoberflächen zu einer dauerhaften Verkittung der Sandkörner kommt. Der Kalksandstein hat nach dem Verlassen des Autoklaven seine endgültige Festigkeit erreicht und kann ohne weitere Bearbeitung auf der Baustelle verarbeitet werden.

Zur Herstellung von Gasbetonsteinen wird kieselsäurehaltiger Sand mit Zement oder Kalk zu einem Mörtel gemischt und mit einem gasbildenden Treibmittel wie Aluminiumpulver versetzt. In Gießformen eingebracht treibt das entweichende Gas den Mörtel auf und es entsteht eine porige Matrix. Der verfestigte Gasbeton muß anschließend maschinell zu Steinen, Platten oder anderen Formteilen geschnitten und schließlich im Autoklaven gehärtet werden.

Aufgabe der Erfindung ist es, einen Baukörper der gattungsgemäßen Art anzubieten, der die vorteilhaften Eigenschaften eines Kalksandsteines (leichte Herstellung) mit den vorteilhaften Eigenschaften eines Gasbetonkörpers (hohe Wärmedämmung) vereint und eine für die Anwendung im Bauwesen ausreichende Druckfestigkeit aufweist.

In Ihrer allgemeinsten Ausführungsform betrifft die Erfindung ein Verfahren zur Herstellung eines Baukörpers mit den Merkmalen des Anspruchs 1.

Gegenüber der bekannten Kalksandstein-Technologie ergeben sich beispielsweise folgende Unterschiede:
- der Zuschlag aus dem genannten Kieselsäureträger, der mit dem Bindemittel reaktionsfähig sein muß, beispielsweise Quarzsand (mit hoher Dichte), wird zumindest teilweise durch einen Leichtzuschlag ersetzt,
- der Zuschlag wird in einer Grob- und in einer Feinfraktion eingesetzt,
- die Mischungskomponenten werden in feuchtkrümeliger Konsistenz aufbereitet,
- die Formgebung erfolgt unter stark verringertem Druck, wobei sich herausgestellt hat, daß Preßdrücke unter 5 N/mm², häufig unter 1 N/mm² ausreichen, das Gemisch in einen formstabilen Rohling zu überführen,
- das Mischungsverhältnis Leichtzuschlag/Bindemittel wird so geändert, daß der fertige Baukörper eine charakteristisch geringere Rohdichte (100 bis 600 kg/m³) aufweist.

Gegenüber der bekannten Gasbeton-Technologie ergeben sich insbesondere folgende Unterschiede:
- der schwere Zuschlag, wie Quarzsand oder Natursand, wird zumindest teilweise durch den genannten Leichtzuschlag ersetzt,
- es wird auf jede Art eines Treibmittels (Gasbildners) verzichtet,
- der Baukörper wird unmittelbar in einer Form in seiner Endgeometrie konfektioniert, so daß jede Nachbearbeitung entfällt.

Die gewünschten Eigenschaften des Baukörpers können durch die nachstehend genannte spezifische Verfahrenstechnik bei der Herstellung positiv beeinflusst werden.

Dazu gehört vor allem die Herstellung der Materialmischung. Im ersten Arbeitsgang werden mindestens 90 Gew.-% der Gesamt-Wassermenge mit einem ersten Teil (Grobfraktion) des Leichtzuschlags gemischt. In der Regel wird das gesamte "Anmachwasser" bereits in dieser Mischstufe zugegeben. Die Menge dieser ersten Charge des Leichtzuschlags wird in jedem Fall so gewählt, dass das zugegebene Wasser möglichst vollständig vom offenen Porenvolumen des Leichtzuschlags aufgesaugt werden kann. Es soll am Ende dieser ersten Mischstufe kein überschüssiges (freies) Wasser vorliegen.

Bei Verwendung von expandiertem Perlit mit einem Schüttgewicht von 60 kg/m³ können 10 Gewichtsteile Perlit bis zu 90 Gewichtsteile Wasser aufnehmen.

Danach werden die Feinfraktion des Leichtzuschlags und das Bindemittel, gegebenenfalls in vorgemischter Form, zugemischt. Auch etwaiges Restwasser kann jetzt zugefüllt werden.

Dieser, trocken zugemischte Teil der Gesamtmischung (insbesondere der Feinanteil des Leichtzuschlags) schafft die Möglichkeit, ein gemischtporiges Gefüge am fertigen Baukörper zu schaffen. Das Gefüge läßt sich wie folgt beschreiben: Die Grobteilchen des Leichtzuschlags bilden eine Art "Kugelpackung" mit Zwickeln dazwischen, die von der Feinfraktion des Leichtzuschlags und dem Bindemittel ausgefüllt sind. Auf punktuelle Oberflächenverbindungen der Körner des Grobzuschlags wird bewußt verzichtet. Die Zwickelverfüllung mit der Feinfraktion des Leichtzuschlags in Kombination mit dem Bindemittel schafft zum einen relativ hohe Festigkeitswerte, begrenzt zum anderen aber die Trocken-Rohdichte des fertigen Baukörpers.

Wichtig ist die Einstellung einer feuchtkrümeligen Konsistenz der Gesamtmischung vor der Formgebung. Dazu sind die Massenanteile, Kornfraktionen und die chemischmineralogische Zusammensetzung der Mischungskomponenten aufeinander abzustimmen.

Der Wassergehalt kann dabei zwischen 20-130 Gew.%, bezogen auf die Gesamt-Trockenmischung, schwanken. In der Regel genügen 30-90 Gew.-%.

Der Bindemittelanteil kann > 20 Gew.-% und < 60 Gew.-% der Gesamt-Trockenmischung betragen

Dies gilt auch für Baukörper höherer Trockenrohdichte (> 350 kg/m³) innerhalb des beanspruchten Bereichs. Bei Zugabe eines Kieselsäure enthaltenden weiteren (schwereren) Zuschlags kann eine feucht-krümelige Konsistenz bereits mit Wassergehalten von 20-60 Gew.-%, bezogen auf die Gesamt-Trockenmischung erhalten werden. Trotz Verwendung von relativ schweren, Kieselsäure enthaltenden Zuschlägen in Anteilen von 10 bis 70 Gew.-% (bezogen auf die Gesamt-Trockenmischung) werden durch die beschriebenen Maßnahmen ebenfalls Baukörper erhalten, die gute Wärmedämmeigenschaften aufweisen.

Soweit Ca0 als Bindemittel verwendet wird holt sich das Bindemittel das zur Bildung von Kalhydrat (Ca(OH)₂) notwendige Wasser aus den Poren des mit Wasser getränkten Leichtzuschlags.

Die vorstehend beschriebenen Herstellungsschritte des Mischens, die auch gemeinsam durchgeführt werden können, können innerhalb von wenigen Minuten erfolgen.

Der Leichtzuschlag kann zumindest anteilig auch in hydrophobierter Form eingesetzt werden.

Nach Zwischenlagerung und Formgebung erfolgt die abschließende Autoklavbehandlung zu fertigen Baukörpern.

Der Baukörper zeichnet sich durch eine geringe Trocken-Rohdichte, nach einer Ausführungsform zwischen 100 und 300 kg/m³, durch eine nochmals verbesserte Wärmedämmung aus und erreicht dabei Druckfestigkeitswerte bis etwa 3,0 N/mm² bei Trocken-Rohdichten bis etwa 300 kg/m³ und Werte über 5,0 N/mm² bei Trocken-Rohdichten bis etwa 600 kg/m³.

Als Leichtzuschlag kann beispielsweise expandiertes Perlit verwendet werden. Perlit weist ein Schüttgewicht zwischen etwa 30 und 200 kg/m³ auf. Es nimmt deshalb bei geringem Gewicht einen erheblichen Volumenanteil ein und senkt die Dichte des Baukörpers gleichzeitig charakteristisch. Dies gilt vor allem auch für den Bereich der Zwickelverfüllung zwischen den Teilchen der Grobfraktion.

Die Grobfraktion des Leichtzuschlags wird nach einer Ausführungsform mit einem mittleren Teilchendurchmeesser (d₅₀) > 1,0 mm eingesetzt, wobei eine obere Korngröße (d₅₀) nach einer Ausführungsform < 5 mm liegt.

Für die Feinfraktion des Leichtzuschlags sieht eine andere Ausführungsform einen mittleren Teilchendurchmesser (d₅₀) < 0,1 mm vor. Dieser Teil kann bei der Herstellung des Baukörpers als Bestandteil des Bindemittels eingesetzt werden. Dazu wird das Bindemittel, beispielsweise Branntkalk beziehungsweise Kalkhydrat, mit der Feinfraktion des Leichtzuschlagstoffes vorgemischt und anschließend mit der Grobfraktion des Leichtzuschlages aufbereitet.

Das Bindemittel kann auch Zement (wie Portlandzement) oder Hüttensand umfassen.

Dadurch, daß die Mischung aus Leichtzuschlag, gegebenenfalls kieselsäurehaltigem Zuschlag, Bindemittel und Wasser anschließend in Formen gefüllt wird, die der Form des fertigen Baukörpers entspricht, lassen sich Baukörper beliebiger Form auch ohne Nachbehandlung herstellen, also beispielsweise Baukörper mit integrierter Nut und/oder Feder entlang jeweils mindestens einer Seitenfläche des Baukörpers oder Baukörper mit durchlaufenden Öffnungen nach Art von Hohlblocksteinen.

Die geringen Preßdrücke (< 5 N/mm²) zur Herstellung der Baukörper schaffen die Möglichkeit, auch großformatige und großvolumige Baukörper in der beschriebenen Art und Weise herzustellen, und zwar auf konventionellen Pressen.

Der kieselsäurehaltige Zuschlag, dessen Kieselsäureanteil mit dem Bindemittel reaktionsfähig sein muß (analog der Kalksandstein-Technologie) kann in Fraktionen < 1 mm eingesetzt werden. Auch natürliche und künstliche Puzzolane, zum Beispiel Flugaschen, gemahlener Bims, Trass etc. oder mineralische Stäube wie Schleifstäube fallen unter den Oberbegriff "kieselsäurehaltige Zuschläge".

Drei beispielhafte Rezepturen (I, II, III) sehen wie folgt aus:

| | I | II | III |
|---|---|---|---|
| expandierter Perlit: (0,25-3mm) | 20-50 kg/m³ | 40-100 kg/m³ | 50-70 kg/m³ |
| CaO | - | - | 30-50 kg/m³ |
| Kalkhydrat: | 150-300 kg/m³ | 40-100 kg/m³ | - |
| expandierter Perlit (< 0,25 mm) | 5-80 kg/m³ | 20-100 kg/m³ | 2-15 kg/m³ |
| Quarzmehl: | 250-400 kg/m³ | 50-120 kg/m³ | - |
| Wasser: | 150-260 kg/m³ | 80-200 kg/m³ | 60-120 kg/m³ |

Bei Einstellung einer Herstellungsfeuchte von 20-25 M-%, bezogen auf die Gesamt-Trockenmischung, läßt sich nach Verpressen der Mischung gemäß I. zu Voll-Steinen und Autoklavbehandlung eine Trocken-Rohdichte von 550 - 600 kg/m³ und eine Druckfestigkeit der Steine von über 5 N/mm² erreichen.

Bei der entsprechenden Verarbeitung der Mischung II mit einer Herstellungsfeuchte von 45-55 M-% berechnet sich die Trocken-Rohdichte zu 170 - 230 kg/m³ und die Druckfestigkeit liegt bei ca. 3 N/mm².

Die Mischung III führt bei analoger Aufbereitung und einer Herstellungsfeuchte von 70-80 Gew.-%, bezogen auf die Gesamt-Trockenmischung, zu einer Trockenrohdichte von 100 bis 150 kg/m³ und einer Druckfestigkeit der Steine von ca. 2N/mm².

## Patentansprüche

1. Verfahren zur Herstellung eines Baukörpers aus einer Mischung mit Mischungskomponenten einer chemischmineralogischen Zusammensetzung, die mindestens einen Leichtzuschlag mit einer Schüttdichte zwischen 30 und 200 kg/m³, mindestens ein Bindemittel sowie Wasser enthält, **gekennzeichnet durch** folgende Schritte:
A: Mischen einer Grobfraktion des Leichtzuschlags mit einer Korngröße zwischen 0,25 und 6 mm und mindestens 90 Gew.-% des Wassers,
B: anschließende Zugabe einer Feinfraktion des Leichtzuschlags mit einer Korngröße < 0,25 mm und des Bindemittels,
C: Vermischen der Komponenten gemäß A und B, gegebenenfalls unter Zugabe von Restwasser, unter Einstellung einer feuchtkrümeligen Konsistenz der Mischung,
D: Verarbeitung der Mischung **durch** Formgebung, ohne Zerstörung des Leichtzuschlags, unter Druck, zu dem gewünschten Baukörper und anschließende Autoklavbehandlung, wobei,
E: das Mischungsverhältnis der Komponenten, der Wasseranteil und der Druck so eingestellt werden, daß der dem Autoklav entnommene Baukörper eine Trocken-Rohdichte zwischen 100 und 600 kg/m³ aufweist.

2. Verfahren nach Anspruch 1, bei dem der Leichtzuschlag aus expandiertem Perlit besteht.

3. Verfahren nach Anspruch 1, bei dem die Grobfraktion des Leichtzuschlags in einer Körnung mit einem Teilchendurchmesser d₅₀ > 1 mm eingesetzt wird.

4. Verfahren nach Anspruch 1, bei dem die Grobfraktion des Leichtzuschlags in einer Körnung mit einem Teilchendurchmesser d₅₀ < 5 mm eingesetzt wird.

5. Verfahren nach Anspruch 1, bei dem die Feinfraktion des Leichtzuschlags in einer Körnung mit einem Teilchendurchmesser d₅₀ < 0,1 mm eingesetzt wird.

6. Verfahren nach Anspruch 1, bei dem das Bindemittel aus mindestens einem Stoff der Gruppe: CaO, Kalkhydrat, Zement, Hüttensand, Flugasche, gegebenenfalls unter Zugabe eines Anregers für eine hydraulische Bindung, besteht.

7. Verfahren nach Anspruch 1, bei dem das Bindemittel mit der Feinfraktion des Leichtzuschlags vorgemischt der Grobfraktion des Leichtzuschlags zugemischt wird.

8. Verfahren nach Anspruch 1, bei dem ein Kieselsäure enthaltender weiterer Zuschlag aus mindestens einem Stoff der Gruppe: Quarzsand, Natursand, natürliche und künstliche Puzzolane, mineralischer Staub der Mischung zugemischt wird.

9. Verfahren nach Anspruch 8, bei dem ein Kieselsäure enthaltender weiterer Zuschlag in einer Kornfraktion < 1mm eingesetzt wird.

10. Verfahren nach Anspruch 1 oder 8, bei dem das Mischungsverhältnis der Komponenten, der Wasseranteil und der Druck so eingestellt werden, daß der dem Autoklav entnommene Baukörper eine Trocken-Rohdichte zwischen 250 und 600 kg/m³ aufweist.

11. Verfahren nach Anspruch 8, bei dem der Kieselsäure enthaltende Zuschlag in einer Menge von 10 bis 70 Gew.% zugegeben wird.

12. Verfahren nach Anspruch 1, bei dem die Wassermenge gemäß Schritt A vollständig von der Grobfraktion des Leichtzuschlags aufgenommen wird.

13. Verfahren nach Anspruch 1 oder 8, bei dem das Bindemittel, die Feinfraktion und gegebenenfalls der Kieselsäure enthaltende weitere Zuschlag Zwickel zwischen der Grobfraktion des Leichtzuschlags unter Ausbildung eines gemischtporigen Gefüges ausfüllen.

14. Verfahren nach Anspruch 1 oder 8, bei dem das Bindemittel in einer Menge zwischen >20 Gew.% und < 60 Gew.%, bezogen auf die Gesamt-Trockenmischung, eingesetzt wird.

15. Verfahren nach Anspruch 1, bei dem der Gesamt-Trockenmischung zur Erzielung einer feuchtkrümeligen Konsistenz 30 bis 130 Gew.% Wasser zugegeben werden.

16. Verfahren nach Anspruch 8, bei dem der Gesamt-Trockenmischung zur Erzielung einer feuchtkrümeligen Konsistenz 20 bis 60 Gew.% Wasser zugegeben werden.

## Claims

1. A method for producing a formed building body from a mixture with mixture components of a chemical-mineralogical composition, which comprises at least one light additive with a settled apparent density between 30 and 200 kg/m³, at least one binding agent, and water, **characterized by** the following steps:
A. mixing of a gross fraction of the light additive with a grain size between 0.25 and 6 mm and at least 90 % by weight of water,
B. subsequent addition of a fine fraction of the light additive with a grain size of < 0.25 mm and the binding agent,
C. mixing of the components according to A and B, if necessary with the addition of residual water, with adjustment of a crumbly, moist consistency of the mixture,
D. processing of the mixture by molding, without destruction of the light additive, under pressure, to the desired building body and subsequent autoclave treatment, whereby,
E. the mixture ratio of the components, the water part, and the pressure are adjusted, such that the building body taken out the autoclave has a dry bulk density between 100 and 600 kg/m³.

2. The method according to claim 1, in which the light additive is made of expanded perlite.

3. The method according to claim 1, in which the gross fraction of the light additive is used in a coarseness with a particle diameter d₅₀ > 1 mm.

4. The method according to claim 1, in which the gross fraction of the light additive is used in a coarseness with a particle diameter d₅₀ < 5 mm.

5. The method according to claim 1, in which the fine fraction of the light additive is used in a coarseness with a particle diameter d₅₀ < 0.1 mm.

6. The method according to claim 1, in which the binding agent is made of at least one substance of the group: CaO, calcium hydroxide, cement, metallurgical sand (milled blast furnace slag), flue dust, and, if necessary, an addition of a stimulant for a hydraulic bonding.

7. The method according to claim 1, in which the binding agent is premixed with the fine fraction of the light additive before admixing with the gross faction of the light additive.

8. The method according to claim 1, in which a silica-containing, further additive from at least one substance of the group: quartz sand, nature sand, natural and synthetic pozzuolana, and mineral dust is admixed to the mixture.

9. The method according to claim 8, in which a silica-containing, further additive in a granular fraction of < 1 mm is used.

10. The method according to claim 1 or 8, in which the mixture ratio of the components, the water part, and the pressure is adjusted such that the material taken out the autoclave has a dry bulk density of between 250 and 600 kg/m³.

11. The method according to claim 8, in which the silica-containing additive is added in an amount of 10 to 70 % by weight.

12. The method according to claim 1, in which the water quantity according to step A is absorbed completely by the gross fraction of the light additive.

13. The method according to claim 1 or 8, in which the binding agent, the fine fraction, and, as the case may be, the silica-containing further additive fill up gores between the gross fraction of the light additive with formation of a mixture-porous grain.

14. The method according to claim 1 or 8, in which the binding agent is used in an amount between > 20 % by weight and < 60 % by weight with reference to the entire dry mixture.

15. The method according to claim 1, in which 30 to 130 % by weight of water is added to the entire dry mixture for achieving a moist, crumbly consistency.

16. The method according to claim 8, in which 20 to 60 % by weight of water is added to the entire dry mixture for achieving a moist, crumbly consistency.

## Revendications

1. Procédé de fabrication d'un élément de construction à partir d'une mixtion de mélange de substances d'une composition chimico-minéralogique, qui contient au moins un agrégat léger avec une densité de déchargement comprise entre 30 et 200 kg/m³, au moins un liant et de l'eau, **caractérisé par** les étapes suivantes :
A : Mélange d'une fraction grossière de l'agrégat léger avec une épaisseur de grain comprise entre 0.25 et 6 mm et au moins 90 % du poids en eau,
B : Adjonction à l'issue d'une fraction fine de l'agrégat léger avec une épaisseur de grain de < 0.25 mm et du liant,
C : Mélange des composants selon A et B, le cas échéant en ajoutant de l'eau indéterminée, jusqu'à l'obtention d'un mélange à consistance grumeleuse humide,
D : Traitement du mélange par façonnage, sans détruire l'agrégat léger, par pression, en un élément de construction souhaité et par traitement à l'autoclave à l'issue, dans lequel,
E : le rapport de mélange des composants, de la proportion d'eau et de la pression est calculé de telle façon que l'élément de construction extrait de l'autoclave possède une masse volumique apparente sèche comprise entre 100 et 600 kg/m³.

2. Procédé selon la revendication 1, pour lequel l'agrégat léger est composé de perlite expansée.

3. Procédé selon la revendication 1, pour lequel la fraction grossière de l'agrégat léger est utilisée en granulation avec un diamètre de particule de d₅₀ < 1 mm.

4. Procédé selon la revendication 1, pour lequel la fraction grossière de l'agrégat léger est utilisée en granulation avec un diamètre de particule de d₅₀ < 5 mm.

5. Procédé selon la revendication 1, pour lequel la fraction fine de l'agrégat léger est utilisée en granulation avec un diamètre de particule de d₅₀ < 0.1 mm.

6. Procédé selon la revendication 1, pour lequel le liant est composé d'au moins un matériau du groupe : CaO, chaux hydratée, ciment, laitier granulé, cendre volante, le cas échéant en ajoutant un activateur pour une liaison hydraulique.

7. Procédé selon la revendication 1, pour lequel le liant pré-mélangé avec la fraction fine de l'agrégat léger est mélangé à la fraction grossière de l'agrégat léger.

8. Procédé selon la revendication 1, pour lequel un agrégat supplémentaire contenant de l'acide silicique composé d'au moins un matériau du groupe : sable siliceux, sable silico-argileux, pouzzolane naturelle et artificielle, poussière minérale, est ajouté au mélange.

9. Procédé selon la revendication 8, pour lequel un agrégat supplémentaire contenant de l'acide silicique est utilisé avec une fraction de grain de < 1 mm.

10. Procédé selon la revendication 1 ou 8, pour lequel le rapport concernant le mélange des composants, la proportion d'eau et la pression est calculé de telle façon que l'élément de construction extrait de l'autoclave possède une masse volumique apparente sèche comprise entre 250 et 600 kg/m³.

11. Procédé selon la revendication 8, pour lequel l'agrégat contenant de l'acide silicique est ajouté à concurrence de 10 à 70 % du poids.

12. Procédé selon la revendication 1, pour lequel la quantité d'eau selon l'étape A est absorbée entièrement par la fraction grossière de l'agrégat léger.

13. Procédé selon la revendication 1 ou 8, pour lequel le liant, la fraction fine et le cas échéant l'agrégat contenant de l'acide silicique, servent de remplissage entre la fraction grossière de l'agrégat léger en formant une texture poreuse mélangée.

14. Procédé selon la revendication 1 ou 8, pour lequel le liant est utilisé à concurrence de > 20 % du poids et < 60 % du poids, rapporté au mélange sec total.

15. Procédé selon la revendication 1, pour lequel de l'eau à concurrence de 30 à 130 % du poids est ajoutée au mélange sec total en vue d'obtenir une consistance grumeleuse humide.

16. Procédé selon la revendication 8, pour lequel de l'eau à concurrence de 20 à 60 % du poids est ajoutée au mélange sec total en vue d'obtenir une consistance grumeleuse humide.
